# EUROPÄISCHE PATENTANMELDUNG

(11) **EP 1 826 432 A2**
(43) Veröffentlichungstag der Anmeldung: **29.08.2007**
(21) Anmeldenummer: 07002160.5
(22) Anmeldetag: 01.02.2007
(51) Int. Cl.: F16D 25/0638, F16D 47/02

(54) **Kupplungsvorrichtung mit Dämpfer**

(30) Priorität: 28.02.2006 US 777582 P
(71) Anmelder: LuK Lamellen und Kupplungsbau Beteiligungs KG, 77815 Bühl (DE)
(72) Erfinder: Graf, Mark, Wooster 44691 (US); Macdonald, Fraser, Farmington Hills, MI 48331 (US)

(57) **Zusammenfassung**

Es wird eine Kupplungseinheit beschrieben, die funktionell zwischen einer Antriebseinheit und einer rotatorisch angetriebenen Einheit angeordnet ist und ein Gehäuse mit einer ersten und einer zweiten Gehäuseschale, einen Flansch und eine Kupplungsbaugruppe beinhaltet, die so angeordnet ist, dass sie das Einkuppeln eines Dämpfers steuern kann. Die Kupplungsbaugruppe und der Dämpfer befinden sich innerhalb des Gehäuses und die Kupplungsbaugruppe ist so angeordnet, dass sie den Flansch und die erste und die zweite Gehäuseschale durch Reibung direkt miteinander einkuppelt.
Es wird auch eine Kupplungseinheit beansprucht, die einen Dämpfer mit kombinierten Befestigungs-Dämpfer-Anschlag aufweist.
Außerdem wird eine Kupplungseinheit beansprucht, die einen Flansch aufweist, wobei eine erste Kupplungsscheibe nicht drehbar am Flansch eingekuppelt ist und eine zweite Kupplungsscheibe nicht drehbar an der ersten Kupplungsscheibe eingekuppelt ist.

## Beschreibung

### GEBIET DER ERFINDUNG

Die vorliegende Erfindung betrifft im Allgemeinen Kupplungseinheiten und insbesondere eine Kupplungseinheit, die so angeordnet ist, dass sie eine Antriebseinheit und eine rotatorisch angetriebene Einheit miteinander verbindet, und speziell eine Kupplungseinheit, die so angeordnet ist, dass sie eine Antriebseinheit und eine rotatorisch angetriebene Einheit miteinander verbindet, die einen kontrolliert einkuppelnden Dämpfer aufweist.

### HINTERGRUND DER ERFINDUNG

Im Allgemeinen sind Kupplungseinheit, die eine Antriebseinheit und eine rotatorisch angetriebene Einheit miteinander verbinden, in der Technik bestens bekannt. Zum Beispiel wurden bisher Drehmomentwandler zur Übertragung von Energie von Verbrennungsmotoren zu rotatorisch angetriebenen Einheiten verwendet, die gleichzeitig den Vorteil der Drehmomentvervielfachung bieten. Da derartige Einheiten bereits seit einiger Zeit verwendet werden, setzen die Fahrzeugentwickler immer höhere Erwartungen in die Größe und Leistungsfähigkeit der Kupplungseinheiten. Daher müssen neue Kupplungseinrichtungen kompakte Abmessungen und gleichzeitig ähnliche Leistungsparameter aufweisen. Noch vorteilhafter sind Kupplungseinheiten, bei denen nur die Software des Fahrzeugs geändert werden muss.

Zum Beispiel wird in der US-Patentanmeldung Nr. 11/183 388, die hier durch Bezugnahme einbezogen ist, eine Kupplungseinheit beschrieben, die funktionell so angeordnet ist, dass sie einen Verbrennungsmotor eines Motorfahrzeugs und ein nachfolgendes Getriebe miteinander verbindet. Die Einheit ersetzt einen Drehmomentwandler und kann einen Dämpfer beinhalten. Die Vorrichtung ist so ausgelegt, dass sie dasselbe Einbauvolumen zwischen dem Verbrennungsmotor und dem Getriebe einnimmt wie ein Drehmomentwandler. Beim Einbau dieser Einheit muss lediglich die Software zur Getriebe-/Motorsteuerung ersetzt werden.

Neuere Motor- und Fahrzeugkonstruktionen haben die Entwickler von Kupplungseinheiten vor neue Herausforderungen gestellt. Mit der Einführung von Hybridfahrzeugen, d.h. mit Benzin- und Elektromotoren, wurde es erforderlich, einen Verbrennungsmotor während der gesamten Betriebsdauer zu starten und abzuschalten. Während solcher kritischer dynamischer Ereignisse ist es von Vorteil, bei einem Kupplungssystem alle Dämpfungssysteme von der Kupplungseinheit zu trennen. Dämpfungssysteme sind oft für niederfrequente Resonanzen optimiert, die normalerweise beim Anlassen des Motors, d.h. bei 0 bis 800 U/min, auftreten. Das Anlassdrehmoment wird vom Getriebe über eine Dämpfer-/Kupplungsanordnung zum Verbrennungsmotor übertragen. Wenn die Kupplung während eines Anlassens nicht gesperrt ist, können durch die Zündung im Verbrennungsmotor Drehmomentspitzen auf den Dämpfer übertragen werden, welche dessen Haltbarkeit negativ beeinflussen können. In einem Hybridsystem dieser Art ist es auch zwingend notwendig, dass die Kupplung beim Anlassen überhaupt nicht rutscht, da die Drehzahlen des Verbrennungsmotors und des Anlassermotors aneinander angepasst werden. Diese Anpassung wird durch jedes Rutschen der Kupplung negativ beeinflusst.

Von der Vielzahl von Vorrichtungen und Verfahren für Kupplungseinheiten zum Verbinden einer Antriebseinheit mit einer rotatorisch angetriebenen Einheit lassen sich viele Vorrichtungen ableiten, die den gewünschten Zweck erfüllen, d.h. eine Kupplungseinheit mit einem Mittel zum kontrollierten Einkuppeln eines Dämpfers, sodass die Energie sowohl gedämpft als auch ungedämpft zwischen der Antriebseinheit und der rotatorisch angetriebenen Einheit übertragen werden kann. Bisher mussten bezüglich der Art des Kupplungsmittels, der Dämpfungsleistung und der Abmessungen eines solchen Mittels Kompromisse eingegangen werden. Somit besteht seit langem ein Bedarf an einer Kupplungseinheit mit einem Mittel zum kontrollierten Einkuppeln eines Dämpfers, deren Abmessungen im Wesentlichen denen vorhandener Kupplungseinheiten ähneln.

### KURZZUSAMMENFASSUNG DER ERFINDUNG

Allgemein beinhaltet die vorliegende Erfindung eine Kupplungseinheit mit einem Gehäuse mit einer ersten und einer zweiten Gehäuseschale, einem Flansch und einer Kupplungsbaugruppe, die zum kontrollierten Einkuppeln eines Dämpfers angeordnet ist. Die Kupplungsbaugruppe und der Dämpfer sind innerhalb des Gehäuses untergebracht, und die Kupplungsbaugruppe ist so angeordnet, dass sie durch Reibung direkt am Flansch und an der ersten und zweiten Gehäuseschale einkuppelt. Bei einer Ausführungsart beinhaltet der Dämpfer ein am Flansch anliegendes Endlager.

Bei einer anderen Ausführungsart beinhaltet die Kupplungseinheit mindestens eine nichtdrehbar mit dem Flansch verbundene erste Kupplungsscheibe und einen Kolben, der zum Einkuppeln der mindestens einen ersten Kupplungsscheibe mit mindestens einer der Gehäuseschalen durch Reibung angeordnet ist.

Bei einer weiteren Ausführungsart beinhaltet die Kupplungseinheit mindestens eine fest an einer der Gehäuseschalen angebrachte zweite Kupplungsscheibe. In diesem Fall kann der Kolben so angeordnet sein, dass er an der mindestens einen ersten Kupplungsscheibe, der mindestens einen zweiten Kupplungsscheibe und der mindestens einen Gehäuseschale durch Reibung einkuppelt.

Bei einer weiteren Ausführungsart beinhaltet die Kupplungseinheit mindestens einen kombinierten Befestigungs-Dämpfer-Anschlag. Bei dieser Ausführungsart beinhaltet die erste Gehäuseschale mindestens eine Öffnung, in der mindestens ein kombinierter Anschlag untergebracht ist. Der kombinierte Anschlag ist so angeordnet, dass er ein Befestigungselement für die Antriebseinheit aufnimmt und eine Lagerfläche für den Dämpfer bereitstellt.

Eine allgemeine Aufgabe der Erfindung besteht darin, eine Kupplungseinheit zum Verbinden einer Antriebseinheit mit einer rotatorisch angetriebenen Einheit bereitzustellen.

Eine andere Aufgabe der Erfindung besteht darin, eine Kupplungseinheit mit einem Mittel zum kontrollierten Einkuppeln eines Dämpfers bereitzustellen.

Eine weitere Aufgabe der Erfindung besteht darin, eine Kupplungseinheit bereitzustellen, die so angeordnet ist, dass sie einen Dämpfer während kritischer dynamischer Ereignisse, z.B. beim Anlassen und Abschalten eines Motors, bei Bedarf abtrennt.

Diese sowie weitere Aufgaben, Merkmale und Vorteile der vorliegenden Erfindung werden dem Fachmann aus der detaillierten Beschreibung der Erfindung in Verbindung mit den Zeichnungen und den angehängten Ansprüchen klar.

### KURZBESCHREIBUNG DER ZEICHNUNGEN

Im Folgenden werden das Wesen und die Funktion der vorliegenden Erfindung im Rahmen der detaillierten Beschreibung der Erfindung in Verbindung mit den beiliegenden Figuren ausführlich beschrieben, wobei:
Fig. 1 die Explosionsdarstellung einer perspektivischen Vorderansicht einer Kupplungseinheit der vorliegenden Erfindung ist;
Fig. 2 die Explosionsdarstellung einer perspektivischen Rückansicht der in Fig. 1 gezeigten Kupplungseinheit ist;
Fig. 3 die Draufsicht einer Rückseite einer ersten Ausführungsart einer Kupplungseinheit der vorliegenden Erfindung ist;
Fig. 4 eine Querschnittsansicht der in Fig. 3 gezeigten Kupplungseinheit entlang der Schnittlinie 4 - 4 von Fig. 3 ist;
Fig. 5 eine vergrößerte Querschnittsansicht des Flansches, des Kolbens und der Kupplungsscheiben ist, die im Kreisausschnitt 5 von Fig. 4 gezeigt sind;
Fig. 6 eine perspektivische Vorderansicht eines Ausschnitts einer ersten Gehäuseschale von Fig. 1 ist, die einen innerhalb der Gehäuseschale fest angebrachten kombinierten Befestigungs-Dämpfer-Anschlag zeigt;
Fig. 7 eine perspektivische Rückansicht eines Ausschnitts der Gehäuseschale von Fig. 6 ist, die eine erste Dämpferlagerfläche zeigt;
Fig. 8 eine perspektivische Vorderansicht eines Ausschnitts einer zweiten Gehäuseschale von Fig. 1 ist, die eine zweite Dämpferlagerschale aufweist;
Fig. 9 eine perspektivische Vorderansicht einer Nabe ist; und
Fig. 10 eine perspektivische Vorderansicht einer Ausführungsart eines Kupplungspakets ist.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung in Bezug auf eine gegenwärtig als bevorzugt angesehene Ausführungsart beschrieben wird, ist klar, dass die beanspruchte Erfindung nicht auf die bevorzugte Ausführungsart beschränkt ist.

Außerdem sollte klar sein, dass die vorliegende Erfindung nicht auf die bestimmten beschriebenen Verfahren, Materialien und Änderungen beschränkt ist und insofern natürlich variieren kann. Ferner ist klar, dass die hier gebrauchte Terminologie nur zur Beschreibung bestimmter Ausführungsarten dient und nicht den Geltungsbereich der vorliegenden Erfindung einschränken soll.

Wenn nicht anders erwähnt, haben alle hier gebrauchten technischen und wissenschaftlichen Begriffe dieselbe Bedeutung, wie sie einem Fachmann, an den diese Erfindung gerichtet ist, geläufig sind. Obwohl zur Ausführung und zum Testen der Erfindung beliebige Verfahren, Vorrichtungen oder Materialien gebraucht werden können, die den hier beschriebenen ähnlich sind, werden im Folgenden die bevorzugten Verfahren, Vorrichtungen und Materialien beschrieben.

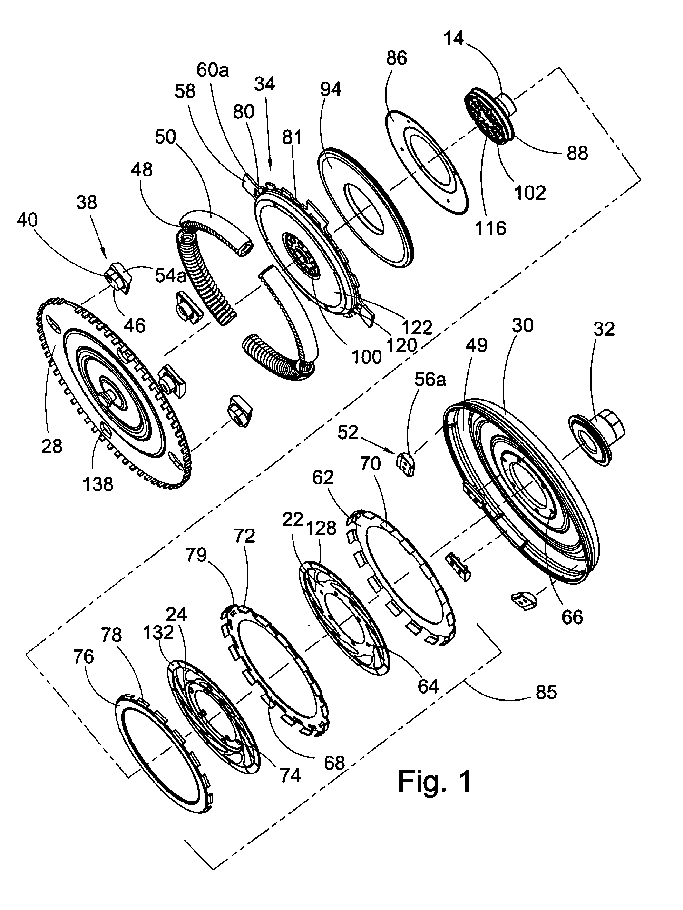

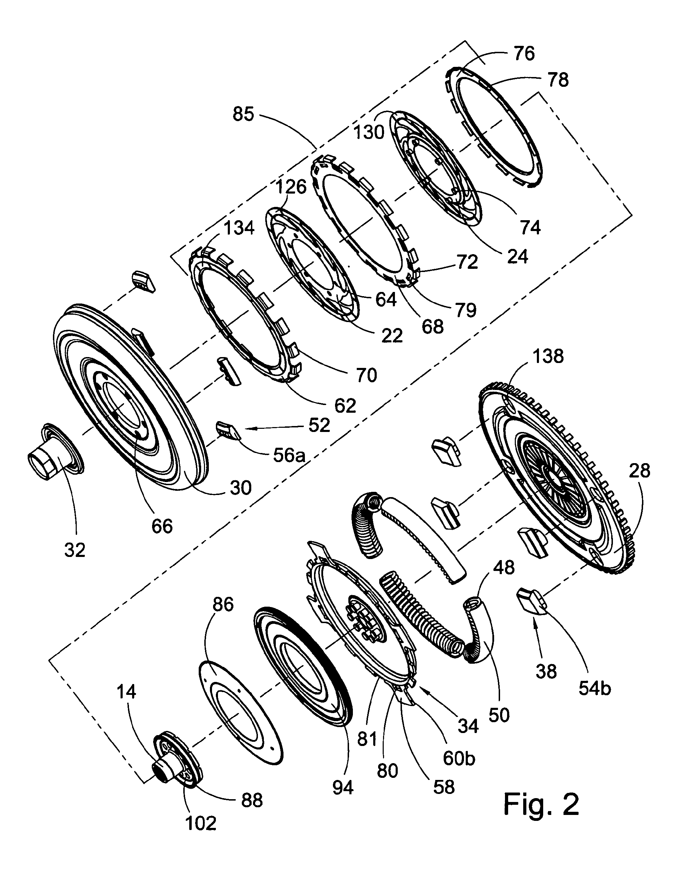

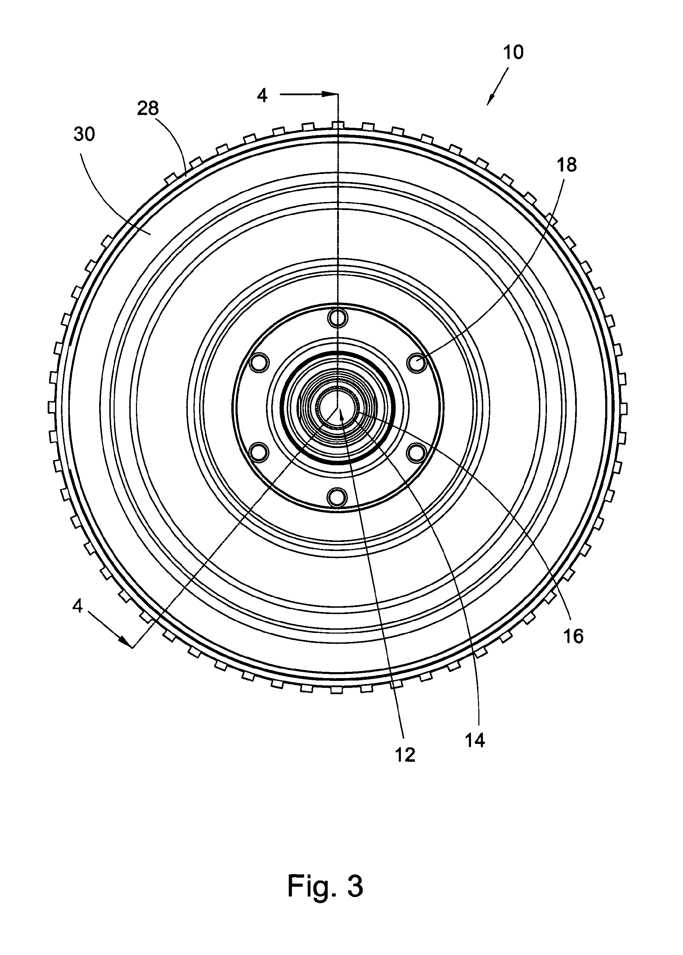

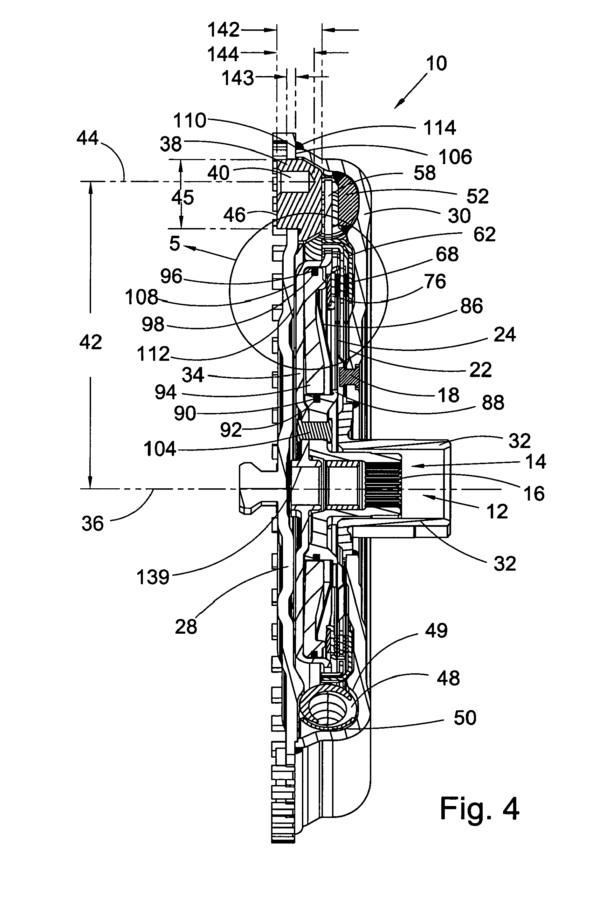

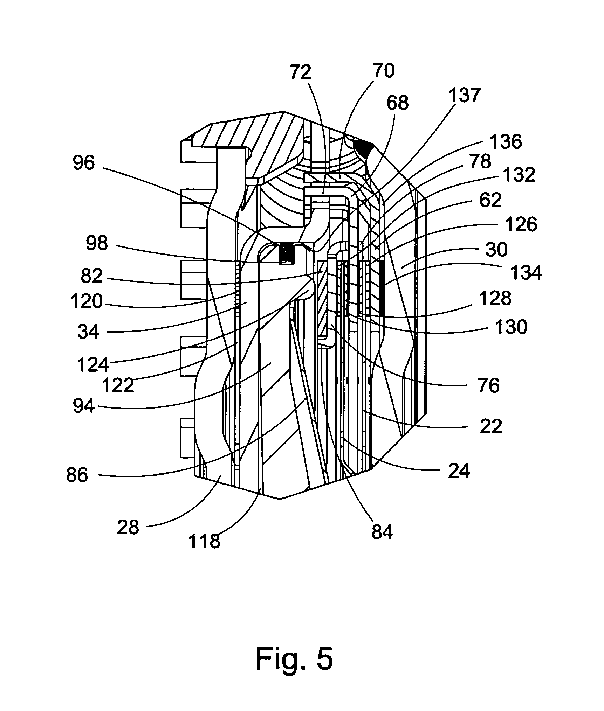

Fig. 1 ist eine perspektivische Vorderansicht der Kupplungseinheit 10 in Explosionsdarstellung, während Fig. 2 eine perspektivische Rückansicht der Kupplungseinheit 10 in Explosionsdarstellung ist. Fig. 3 ist eine Draufsicht auf die Rückseite einer ersten Ausführungsart der Kupplungseinheit 10 der vorliegenden Erfindung, während Fig. 4 eine Querschnittsansicht der Kupplungseinheit 10 entlang der Schnittlinie 4 - 4 von Fig. 3 ist. Fig. 5 ist eine vergrößerte Querschnittsansicht des Flansches, des Kolbens und der Kupplungsscheiben, die im Kreisausschnitt 5 von Fig. 4 gezeigt sind. Die folgende Beschreibung ist in Verbindung mit den Figuren 1 bis 5 zu sehen. Die Kupplungseinheit 10 beinhaltet eine Öffnung 12, die so angeordnet ist, dass sie eine Eingangswelle einer (nicht gezeigten) rotatorisch angetriebenen Einheit aufnimmt. Die in der Nähe der Öffnung 12 angeordnete Nabe 14 beinhaltet ein Keilnabenprofil 16. Das Keilnabenprofil 16 greift in die Eingangswelle der rotatorisch angetriebenen Einheit ein und ermöglicht so eine geringfügige axiale Verschiebung der Eingangswelle gegenüber der Kupplungseinheit 10 und verhindert gleichzeitig jegliche Verschiebung zwischen der Nabe 14 und der Welle in Drehrichtung. Eine ausführliche Beschreibung des Wesens und der Funktionsweise der Nabe 14 folgt unten. Niete 18 verbinden die Kupplungsscheiben 22 und 24 fest mit der Kupplungseinheit 10. Obwohl die Niete 18 als Mittel zur Befestigung der Kupplungsscheiben 22 und 24 an der Kupplungseinheit 10 angegeben werden, ist dem Fachmann klar, dass andere Befestigungsmittel, z.B. Schweißen oder Löten, möglich sind und innerhalb von Geist und Geltungsbereich der beanspruchten Erfindung liegen.

Die Kupplungseinheit 10 ist im Wesentlichen vollständig von der ersten und der zweiten Gehäuseschale 28 bzw. 30 umschlossen. Gemäß der obigen Beschreibung ist die Kupplungseinheit 10 so angeordnet, dass sie durch die Öffnung 12 eine Eingangswelle einer rotatorisch betriebenen Einheit aufnimmt. Der Pumpenstutzen 32 bildet die Öffnung 12. Der Pumpenstutzen 32, die Nabe 14 und der Flansch 34 weisen eine gemeinsame Rotationsachse, d.h. die Achse 36, auf. Desgleichen ist die Achse 36 gleichzeitig auch die Rotationsachse der Kupplungseinheit 10. Die Kupplungseinheit 10 kann um die Achse 36 rotieren, wenn eine (nicht gezeigte) Antriebseinheit über Bohrungen 40 fest mit kombinierten Befestigungs-Dämpfer-Anschlägen 38 verbunden ist. Der Radius 42, d.h. der Abstand zwischen der Achse 36 und der Mitte 44 der Bohrung, hängt von der Konstruktion der Antriebseinheit ab. Zum Beispiel sind Antriebseinheiten oft über eine Zahnkranzscheibe (flexplate) mit Kupplungseinheiten verbunden. Jede Zahnkranzscheibe hat in der Regel einen speziellen Radius der Befestigungselemente, d.h. Abstand zwischen der Rotationsachse der Zahnkranzscheibe und ihren Befestigungsbohrungen. Somit ist die radiale Position der Bohrung 40 (Radius 42) variabel, und durch die Länge 45 der Fläche 46 des kombinierten Anschlags 38 begrenzt. Wenn zwischen den Außenwänden des kombinierten Anschlags 38 und der Bohrung 40 noch ausreichend Material verbleibt, ist die Bohrung 40 noch belastbar genug, um ein Befestigungselement ohne die Gefahr der Lockerung in der Bohrung 40 aufzunehmen. Somit kann die Bohrung 40 innerhalb der Länge 45 überall angebracht werden, wo noch ausreichend Wandmaterial verbleibt. Obwohl die Bohrung 40 bei dieser Ausführungsart als Befestigungsmittel dargestellt ist, ist dem Fachmann klar, dass auch andere Befestigungsmittel möglich sind, z.B. durch Schmieden vorgeformte Zapfen oder Nasen im kombinierten Anschlag 38 oder ein in der Bohrung 40 vormontierter Gewindestift, sodass eine Zahnkranzscheibe mit einer Mutter am kombinierten Anschlag 38 befestigt werden kann, wobei ein solches Mittel innerhalb von Geist und Geltungsbereich der Erfindung liegt.

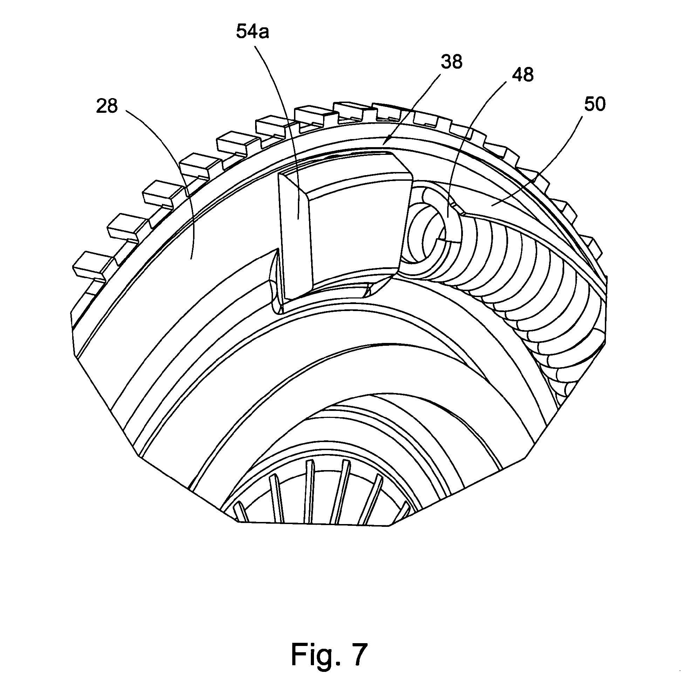

Der kombinierte Anschlag 38 stellt auch eine Lagerfläche für eine Dämpferfeder 48 (siehe Fig. 7) bereit. Bei der dargestellten Ausführungsart sind über den Außenumfang der Gehäuseschale 30 vier Federn 48 verteilt, die durch Gleitkanäle 50 vor der Berührung der Innenfläche 49 der Gehäuseschale 30 geschützt sind. Die Gehäuseschale 30 beinhaltet auch einen Dämpferanschlag 52, der komplementär zum kombinierten Anschlag 38 angeordnet ist. Zum Beispiel sind die Ebenen der Lagerflächen 54a und 54b des kombinierten Anschlags 38 auf die Ebenen der Lagerflächen 56a und 56b des Dämpferanschlags 52 ausgerichtet. Der Flansch 34 beinhaltet Lagerteile 58, während jeder Lagerteil 58 Lagerflächen 60a und 60b beinhaltet. Wenn eine Antriebseinheit die Kupplungseinheit 10 in Rotation versetzt, rotieren auch die Gehäuseschalen 28 und 30 und die kombinierten Anschläge 38 bzw. Dämpferanschläge 52 sowie durch ihren Kupplungsteil mit den Lagerflächen 54a, 54b, 56a, und 56b auch die Federn 48. Dadurch übertragen die Federn 48 die Rotationsenergie über die Lagerflächen 60a und 60b der Lagerteile 58 auf den Flansch 34. Spitzen oder Unregelmäßigkeiten der von der Antriebseinheit zugeführten Rotationsenergie werden vor der Übertragung der Energie zum Flansch 34 durch die Federn 48 gedämpft. Somit ermöglicht die Kombination der Lagerflächen 54a, 54b, 56a, 56b, 60a und 6b sowie die Lage der Federn 48 eine Schwingungsdämpfung der durch eine zugehörige Antriebseinheit zugeführten Antriebsenergie. Mit anderen Worten, durch die Dämpfung werden Unregelmäßigkeiten des durch eine Antriebseinheit zugeführten Drehmoments vor der Übertragung der Antriebsenergie über den Flansch 34 und die Nabe 14 zur rotatorisch angetriebenen Einheit durch diese Anordnung verringert.

Mitunter ist es wünschenswert, das oben erwähnte Zusammenwirken des Flansches 34 mit den Federn 48 zu unterbinden, sodass die Kupplungseinheit 10 keine negativen Auswirkungen erleidet, z.B. durch Beschädigungen des Flansches 34 oder der Federn 48. Gemäß der obigen Beschreibung sind solche Ereignisse in der Technik als kritische dynamische Ereignisse bekannt, z.B. beim Anlassen und Abschalten des Motors. Somit erweist sich die Bereitstellung eines Mittels zum Sperren der Relativverschiebung des Flansches 34 für die zuverlässige Langzeitnutzung einer Kupplungseinheit als vorteilhaft. Gemäß der in Fig. 2 gezeigten Ausführungsart kann der Flansch durch die folgende Anordnung kontrolliert zu- und abgeschaltet werden. Bei dieser Ausführungsart ist zunächst die Kupplungsscheibe 62 zentral in der Gehäuseschale 30 angeordnet. Weiterhin ist die Kupplungsscheibe 22 auf ähnliche Weise so angeordnet und ausgerichtet, dass die Nietlöcher 64 der Kupplungsscheibe 22 axial auf die Bohrungen 66 der Gehäuseschale 30 ausgerichtet sind. Ferner ist die Kupplungsscheibe 62 so innerhalb der Flanschansätze 70 der Kupplungsscheibe 68 angeordnet, dass die Flanschansätze 72 der Kupplungsscheibe 68 auf die Flanschansätze 70 ausgerichtet sind. Dann ist die Kupplungsscheibe 24 so angeordnet, dass die Nietlöcher 74 der Kupplungsscheibe 24 axial auf die Bohrungen 66 der Gehäuseschale 30 ausgerichtet sind. Die Niete 18 befinden sich in den Bohrungen 66 der Gehäuseschale 30 und den Löchern 64 und 74 der Kupplungsscheiben 22 bzw. 24 und befestigen dadurch die Kupplungsscheiben 22, 24, 62 und 68 an der Gehäuseschale 30. Ferner ist die Kupplungsscheibe 76 innerhalb der Kupplungsscheibe 68 so angeordnet, dass die Flanschansätze 78 der Kupplungsscheibe 76 auf die Schlitze 80 der Kupplungsscheibe 68 ausgerichtet sind. Und schließlich ist eine passgenaue Unterlegscheibe 82 auf der Kupplungsscheibe 76 angebracht und durch den Flanschansatz 84 der Kupplungsscheibe 76 ausgerichtet. Die Kupplungsscheiben 22, 24, 62, 68 und 76 sowie die passgenaue Unterlegscheibe 82 bilden zusammen das Kupplungspaket 85.

Der Rest der Kupplungseinheit 10 wird vor dem Einbau außerhalb der Kupplungseinheit 10 zusammengebaut. Eine Membranfeder 86 wird um das dem Ende der Nabe 14 entgegengesetzte Keilnabenprofil 16 herum angeordnet, sodass die Membranfeder 86 am Absatz 88 der Nabe 14 anliegt. Im Kanal 92 der Nabe 14 wird eine Dichtung 90 angeordnet, die ein Dichtungsmittel zwischen Nabe 14 und Kolben 94 bildet. Außerdem wird im Kanal 98 des Kolbens eine Dichtung 96 angeordnet, die ein weiteres Dichtungsmittel zwischen Kolben 94 und Flansch 34 bildet. Anschließend wird an dem dem Ende der Nabe 14 entgegengesetzten Keilnabenprofil 16 ein Kolben 94 so angeordnet, dass dieser zum Beispiel an der Membranfeder 86 anliegt. Dann wird an der dem Ende der Nabe 14 entgegengesetzten Seite ein Flansch 34 so angeordnet, dass die Löcher 100 des Flansches 34 axial auf die Löcher 102 der Nabe 14 ausgerichtet sind. Und schließlich werden Niete 104 durch die Löcher 100 und 102 gesteckt, welche den Flansch 34 an der Nabe 14 befestigen und so die Membranfeder 86, den Kolben 94 und den Flansch 34 auf der Nabe 14 befestigen. Obwohl die Niete 104 als Mittel zur Befestigung der Nabe am Flansch 34 beschrieben werden, ist dem Fachmann klar, dass andere Befestigungsmittel, z.B. durch Schweißen oder Löten, möglich sind und dass solche Mittel innerhalb von Geist und Geltungsbereich liegen. Zwischen dem Kolben 94 und der Membranfeder 86 kommt es zu keiner rotatorischen Relativbewegung, sodass der Verschleiß am Kolben 94 minimal ist. Bei einer bevorzugten Ausführungsart ist der Kolben 94 aus einer Aluminiumlegierung hergestellt. Daher besitzt der Kolben 94 eine geringere Masse und ein geringeres Trägheitsmoment auf als ein Kolben, der aus einem dichteren Material hergestellt ist. Durch das geringere Trägheitsmoment spricht die Kupplung schneller an, was bei Hybridanwendungen erforderlich ist.

Die passgenaue Unterlegscheibe 82 dient zur Steuerung des Abhebens durch das Kupplungspaket 85. Das kontrollierte Abheben ist erforderlich, um möglichst kurze Kupplungszeiten sicherzustellen. Da die passgenaue Unterlegscheibe 82 verwendet wird, um diverse Fertigungstoleranzen und Abweichungen der Bauteile auszugleichen, muss deren Dicke für eine fertige Baugruppe ermittelt werden. Gemäß einigen Aspekten wird die Naben-Flansch-Baugruppe in die Gehäuseschale 30 eingesetzt und eine Messung zwischen der Position der Fläche 106 der Gehäuseschale 30 und der freiliegenden Fläche 108 des Reibungsmaterials durchgeführt. Dann wird eine Messung zwischen den Flächen 110 und 112 der Gehäuseschale 28 durchgeführt. Anhand der Werte dieser beiden Messungen wird die Dicke der passgenauen Unterlegscheibe 82 berechnet. Die Naben-Flansch-Baugruppe wird wieder ausgebaut, die passgenaue Unterlegscheibe 82 mit der berechneten Dicke wie oben beschrieben in das Kupplungspaket 85 eingesetzt und die Naben-Flansch-Baugruppe wieder an ihrer Position in der Gehäuseschale 30 eingesetzt. Die Gehäuseschale 28 wird so auf die Gehäuseschale 30 aufgesetzt, dass die kombinierten Anschläge 38, die Lagerteile 58 und die Anschläge 52 aufeinander ausgerichtet sind. Zum Schluss werden die Gehäuseschalen 28 und 30 durch eine Schweißnaht 114 fest miteinander verbunden. Obwohl die in Fig. 2 dargestellte Ausführungsart durch eine Schweißnaht 114 fest miteinander verbundene Gehäuseschalen 28 und 30 zeigt, ist dem Fachmann klar, dass andere Befestigungsmittel möglich sind, z.B. Laserschweißen oder Löten und dass solche Mittel in Geist und Geltungsbereich der beanspruchten Erfindung enthalten sind.

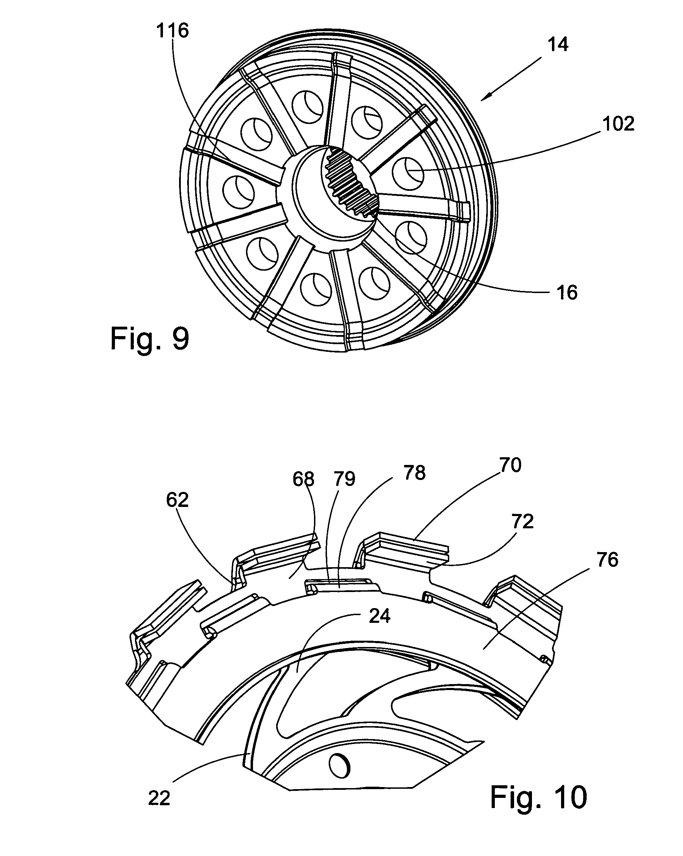

Um die Lebensdauer der Kupplungseinheit 10 zu verlängern, muss der Flansch 14 wie oben beschrieben während kritischer dynamischer Ereignisse abgetrennt werden. Bei der in den Figuren gezeigten Ausführungsart wird der Flansch 34 nach dem folgenden Verfahren abgetrennt. Eine (nicht gezeigte) unter Druck stehende Hydraulikflüssigkeit wird durch die Eingangswelle der rotatorisch angetriebenen Einheit zugeführt und strömt zwischen dem Flansch 34 und der Nabe 14 durch Kanäle 116 der Nabe 14 (siehe Fig. 9) zur Arbeitskammer 118. Mit zunehmendem Flüssigkeitsdruck in der Arbeitskammer werden der Kolben 94 und der Flansch 34 voneinander getrennt. Das Reibungsmaterial 120 ist fest auf der Oberfläche 122 des Flansches 34, d.h. auf der der Arbeitskammer 118 abgewandten Oberfläche des Flansches 34, angebracht. Somit wird der Flansch 34 zur Gehäuseschale 28 hin verschoben, das Reibungsmaterial 120 drückt gegen die Fläche 112 der Gehäuseschale 28, verbindet die Gehäuseschale 28 und den Flansch 34 direkt miteinander und verhindert so eine relative Rotationsbewegung zwischen der Gehäuseschale 28 und dem Flansch 34.

Desgleichen wird mit zunehmendem Druck in der Arbeitskammer 118 der Kolben 94 gegen die Gehäuseschale 30 gedrückt. Dadurch wird der Vorsprung 124 gegen die passgenaue Unterlegscheibe 82 gedrückt, die wiederum das Kupplungspaket 85 zusammendrückt. Um während des Zusammendrückens einen Reibungswiderstand zu erzeugen, sind die Kupplungsscheiben 22 und 24 jeweils auf beiden Seiten und die Kupplungsscheibe 62 auf einer Seite mit einem Reibungsmaterial versehen. Die Kupplungsscheibe 22 trägt das Reibungsmaterial 126 auf der der Gehäuseschale 30 zugewandten Fläche und das Reibungsmaterial 128 auf der der Gehäuseschale 28 zugewandten Fläche. Desgleichen trägt die Kupplungsscheibe 24 das Reibungsmaterial 130 auf der der Gehäuseschale 30 zugewandeten Fläche und das Reibungsmaterial 132 auf der der Gehäuseschale 28 zugewandten Fläche. Die Kupplungsscheibe 62 hingegen trägt das Reibungsmaterial 134 lediglich auf der Fläche 136, d.h. auf der der Gehäuseschale 30 zugewandten Fläche. Gemäß der obigen Beschreibung drückt der Kolben 94 das Kupplungspaket 85 zusammen, indem die passgenaue Unterlegscheibe 82 gegen die Kupplungsscheibe 76, diese wiederum gegen das Reibungsmaterial 132, die Kupplungsscheibe 24 und das Reibungsmaterial 130, dieses gegen die Kupplungsscheibe 68 und diese wiederum gegen das Reibungsmaterial 128, die Kupplungsscheibe 22 und das Reibungsmaterial 126 drückt, das wiederum die Kupplungsscheibe 62 mit dem Reibungsmaterial 134 gegen die Gehäuseschale 30 drückt und so die Gehäuseschale 30 und den Flansch 34 direkt miteinander verbindet und dadurch eine relative Rotationsbewegung zwischen der Gehäuseschale 30 und dem Flansch 34 verhindert.

Im eingekuppelten Zustand überträgt das Kupplungspaket 85 ein Drehmoment von einem Anlassermotor in der rotatorisch angetriebenen Einheit über den folgenden Übertragungsweg zur Antriebseinheit: 1) durch die Nabe 14; 2) durch die Niete 104 zwischen Flansch 34 und Nabe 14; 3) durch den Flansch 34; 4a) durch das Reibungsmaterial 120 auf dem Flansch 34 zur ersten Gehäuseschale 28; 4b) durch die Kupplungsscheiben 62, 68 und 76 zu den Kupplungsscheiben 22 und 24, den Nieten 18 und die zweite Gehäuseschale 30; 4c) durch die Kupplungsscheibe 62 zur zweiten Gehäuseschale 30; und 5) durch den kombinierten Anschlag 38 zur Antriebseinheit.

Das Kupplungspaket 85 wird infolge der durch die von der Membranfeder 86 ausgeübten Kräfte wieder in seinen ursprünglich getrennten Zustand versetzt. Bei Verringerung des Drucks der Hydraulikflüssigkeit in der Arbeitskammer 118 drückt die Membranfeder 86 gegen den Kolben 94 und versetzt diesen wieder in seine ursprüngliche Ruhestellung, d.h. der Kolben wird gegen den Flansch 34 gedrückt.

Im ausgekuppelten Zustand des Kupplungspakets 85, d.h. wenn der Flansch 34 rotieren kann, wird ein Drehmoment von der Antriebseinheit über den folgenden Übertragungsweg zur rotatorisch angetriebenen Einheit übertragen: 1) durch die kombinierten Anschläge 38 an der ersten Gehäuseschale 28 und durch Dämpferanschläge 52 an der zweiten Gehäuseschale 30; 2) durch die Federn 48; 3) durch den Flansch 34; 4) durch die Niete 104 zwischen dem Flansch 34 und der Nabe 14; 5) durch die Nabe 14 zur Eingangswelle der rotatorisch angetriebenen Einheit.

Bei der in den Figuren gezeigten Ausführungsart erfüllt der Flansch 34 mehrere Funktionen. Im ausgekuppelten Zustand des Kupplungspakets 85 überträgt der Flansch 34 das Drehmoment von den Federn 48 zur Nabe 14. Außerdem absorbiert das Reibungsmaterial 120 auf der Fläche 122 des Flansches 34 im ausgekuppelten Zustand des Kupplungspakets Kupplungspaket 85 jede zufällige Berührung zwischen dem Flansch 34 und der Gehäuseschale 28 auf, die auf kurzzeitige axiale Verschiebungen des Flansches 34 zurückzuführen ist. Wenn hingegen das Kupplungspaket 85 eingekuppelt ist, bilden der Flansch 34 und der Kolben 94 die Arbeitskammer (Druckkammer) 118. Die Dichtung 96 auf dem äußeren Umfang des Kolbens 94 dichtet die Fläche 137 des Flansches 34 ab, während die Dichtung 90 auf dem inneren Umfang des Kolbens 94 den äußeren Umfang der Nabe 14 abdichtet. Die innere Umfangsfläche 139 des Flansch 34 dient als Dichtfläche für die (nicht gezeigte) Eingangswelle. Das Reibungsmaterial 120 dient als eine von sechs Reibungsflächen der Kupplung mit Kupplungsüberbrückung. Der Flansch 34 überträgt das Drehmoment von den Kupplungsscheiben 62, 68 und 76 zur Nabe 14.

Durch die oben beschriebene Anordnung des Flansches 34 und des Kupplungspakets 85 ist die Kupplungseinheit 10 in der Lage, den Schlupf zwischen der Antriebseinheit und der rotatorisch angetriebenen Einheit vollständig zu verhindern. In Systemen wie beispielsweise Hybridfahrzeugen ist es zwingend erforderlich, dass der Flansch 34 während des Anlassens nicht rutscht, da die der Verbrennungsmotor und der Anlassermotor synchron laufen müssen. Diese Synchronisierung wird durch jedes Rutschen der Kupplung negativ beeinflusst. Da das Startdrehmoment zudem über die Kupplungseinheit übertragen wird, wenn der Flansch 34 während des Startvorgangs nicht abgetrennt ist, könnten der Flansch 34 und/oder die Federn 48 durch Zündvorgänge im Motor Drehmomentspitzen ausgesetzt werden, was sich nachteilig auf ihre Lebensdauer auswirken könnte.

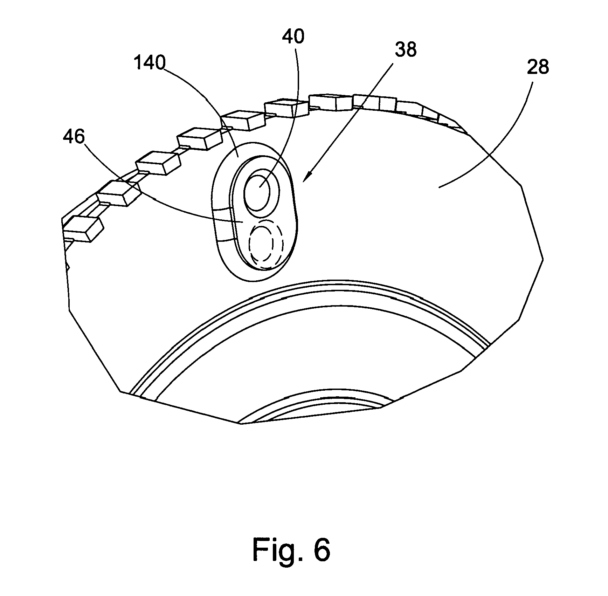

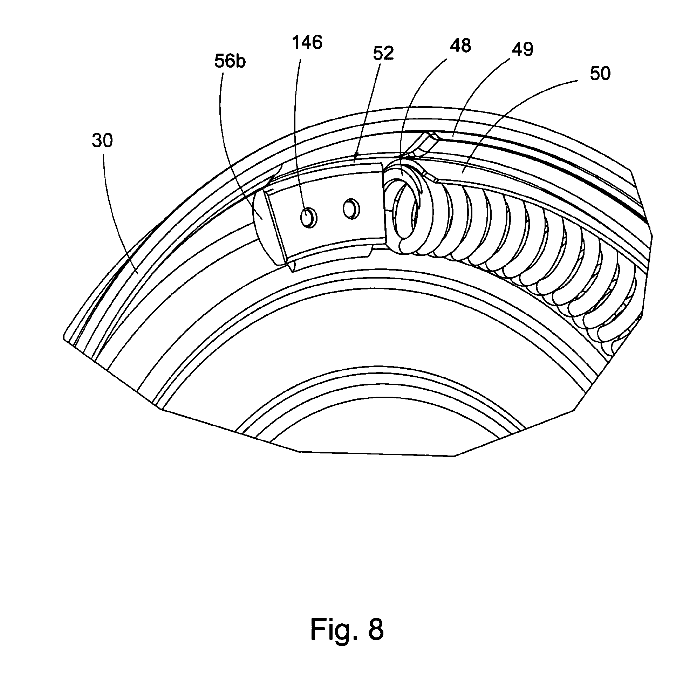

Fig. 6 eine perspektivische Vorderansicht eines Ausschnitts der Gehäuseschale 28 von Fig. 1, die einen innerhalb der Gehäuseschale 28 fest angebrachten kombinierten Befestigungs-Dämpfer-Anschlag 38 zeigt. Fig. 7 ist eine perspektivische Rückansicht eines Ausschnitts der Gehäuseschale 28 von Fig. 6, die eine erste Dämpferlagerfläche 54a zeigt. Fig. 8 ist eine perspektivische Vorderansicht eines Ausschnitts einer Gehäuseschale 30 von Fig. 1, die eine zweite Dämpferlagerschale 56b aufweist. Die folgende Beschreibung ist in Verbindung mit den Figuren 1 bis 8 zu sehen. Die kombinierten Befestigungs-Dämpfer-Anschläge 38 sind in Öffnungen 138 der ersten Gehäuseschale 28 angebracht. Wie oben beschrieben erfordern verschiedene Konstruktionen der Antriebseinheit eine spezielle Anbringung der Befestigungsmittel. Somit kann die Bohrung 40 des kombinierten Anschlags 38 irgendwo entlang der Strecke 45 der Fläche 46 angebracht werden. Fig. 6 zeigt beispielsweise eine gemäß den Anforderungen einer Antriebseinheit angeordnete Bohrung, während die gleiche, gestrichelt dargestellte Bohrung gemäß den Anforderungen einer anderen Antriebseinheit angeordnet ist. Das heißt, die Bohrungen weisen unterschiedliche radiale Abstände 42 auf. Bei der in Fig. 6 gezeigten Ausführungsart ist der kombinierte Anschlag 38 durch eine Schweißnaht 140 fest mit der Öffnung 138 verbunden. Die Verwendung eines separaten Elements mit einer Dicke 142, die größer als die Dicke 143 der Gehäuseschale 28 ist, stellt einen weiteren in dieser Ausführungsart gezeigten Vorteil dar. Die Dicke 142 muss groß genug sein, um die Länge 144 der Bohrung 40 aufzunehmen. Normalerweise ist die Dicke 142 jedoch größer als für die Dicke 143 erforderlich oder wünschenswert. Durch die Bereitstellung dieser Materialdicke zum Anbringen der Bohrung 40 in einem separaten Element, d.h. im kombinierten Anschlag 38, kann die Gehäuseschale 28 unter Verwendung eines weniger aufwändigen Verfahrens, z.B. durch Stanzen, hergestellt werden. Ohne den kombinierten Anschlag 38 müsste die Gehäuseschale 28 für eine gleich große Materialdicke 142 ausgelegt werden. Um eine Gehäuseschale mit den erforderlichen Materialdicken 142 und 144 zu bilden, müssten dann zum Beispiel Gießverfahren oder spanabhebende Verfahren eingesetzt werden. Darüber hinaus verfügt der kombinierte Anschlag 38 durch die Dicke 142 über ausreichend Material, das als Lagerfläche gegen die Federn 48 dienen kann, d.h. als Lagerflächen 54a und 54b.

Desgleichen ist die Gehäuseschale 30 mit Lagerflächen gegen die Federn 48 ausgestattet. Vorsprünge 146 an der Vorderseite des Gehäuses 30 kuppeln an Öffnungen in den Dämpferanschlägen 52 ein. Die Vorsprünge und Öffnungen dienen zur Positionierung oder Anordnung der Dämpferanschläge. Zur festen Verbindung der Anschläge mit der Gehäuseschale 30 werden beliebige in der Technik bekannte Mittel verwendet, z.B., aber nicht darauf beschränkt, Schweißnähte. Obwohl die in Fig. 8 dargestellte Ausführungsart Befestigungselemente 146 zeigt, welche die Dämpferanschläge 52 fest mit der Gehäuseschale 30 verbinden, ist dem Fachmann klar, dass auch andere Befestigungsmittel möglich sind, z.B. durch Laserschweißen oder Löten, und dass solche Mittel in Geist und Geltungsbereich der beanspruchten Erfindung enthalten sind. Gemäß der obigen Beschreibung wird die Dämpfung durch die Kombination aus den Lagerflächen 54a, 54b, 56a, 56b, 60a und 60b sowie den Federn 48 bewirkt. Durch die Kopplung der Rotation des Flansches 34 mit der Rotation der ersten und zweiten Gehäuseschale 28 bzw. 30 wird die Verschiebung des Flansches 34 gegenüber den Federn 48 verhindert. Dadurch werden der Flansch 34 und die Federn 48 wirksam ausgeschaltet.

Allgemein umfasst die Kupplungseinheit 10 Gehäuseschalen 28 und 30 mit kombinierten Anschlägen 38 bzw. Dämpferanschlägen 52, einen Flansch 34, Federn 48 und ein Mittel zum kontrollierten Sperren der Drehbewegung des Flansches 34 gegenüber den Gehäuseschalen 28 und 30. Gemäß einigen Aspekten wird der Flansch 34 über Reibungsmaterialien auf dem Flansch und der Kupplungsbaugruppe 85 direkt mit den Gehäuseschalen 28 und 30 verriegelt, sodass die Rotationsbewegung des Flansches Flansch 34 gegenüber den Gehäuseschalen 28 und 30 verhindert wird. Ferner kann der Flansch 34 wieder freigegeben werden, sodass die Rotationsbewegung des Flansches 34 gegenüber den Gehäuseschalen 28 und 30 wieder möglich wird. Somit kann die vorliegende Erfindung, die Kupplungseinheit 10, in einem gedämpften Modus, d.h. mit freiem Flansch 34, und in einem ungedämpften Modus, d.h. mit verriegeltem Flansch 34, betrieben werden, sodass die Kupplungseinheit 10 für Hybridanwendungen eingesetzt werden kann.

Somit zeigt sich, dass die Aufgaben der vorliegenden Erfindung wirksam gelöst werden, obwohl dem Fachmann Modifikationen und Änderungen geläufig sein sollten, die in Geist und Geltungsbereich der beanspruchten Erfindung enthalten sind. Ferner ist klar, dass die vorhergehende Beschreibung zur Veranschaulichung der vorliegenden Erfindung dient und nicht als Einschränkung aufzufassen ist. Deshalb sind andere Ausführungsarten der vorliegenden Erfindung möglich, ohne von Geist und Geltungsbereich der vorliegenden Erfindung abzuweichen.

## Patentansprüche

1. Kupplungseinheit, die funktionell so angeordnet ist, dass sie eine Antriebseinheit mit einer rotatorisch angetriebenen Einheit verbindet, wobei die Kupplungseinheit Folgendes umfasst:
ein Gehäuse, das eine erste und eine zweite Gehäuseschale umfasst;
einen Flansch; und
eine Kupplungsbaugruppe, die funktionell so angeordnet ist, dass sie die Funktion eines Dämpfers steuert, wobei die Kupplungsbaugruppe, der Flansch und der Dämpfer in das Gehäuses eingesetzt sind und die Kupplungsbaugruppe so angeordnet ist, dass sie den Flansch und die erste und die zweite Gehäuseschale direkt miteinander verbindet.

2. Kupplungseinheit nach Anspruch 1, bei welcher der Dämpfer ferner ein Endlager umfasst, das an einem Teil des Flansches anliegt.

3. Kupplungseinheit nach Anspruch 1, bei welcher die Kupplungsbaugruppe ferner Folgendes umfasst:
mindestens eine erste Kupplungsscheibe, die nichtdrehbar am Flansch eingekuppelt ist und axial gegenüber dem Flansch verschoben werden kann; und
einen Kolben, der funktionell so angeordnet ist, dass er mindestens eine erste Kupplungsscheibe an mindestens einer der Gehäuseschalen durch Reibung einkuppelt.

4. Kupplungseinheit nach Anspruch 3, die ferner mindestens eine zweite Kupplungsscheibe umfasst, die fest mit einer der Gehäuseschalen verbunden ist, wobei der Kolben funktionell so angeordnet ist, dass er an der mindestens einen ersten Kupplungsscheibe, der mindestens einen zweiten Kupplungsscheibe und der mindestens einen Gehäuseschale einkuppelt.

5. Kupplungseinheit nach Anspruch 3, bei welcher die mindestens eine erste Kupplungsscheibe ferner mindestens zwei erste Kupplungsscheiben umfasst und jede der mindestens zwei ersten Kupplungsscheiben eine entsprechende Vielzahl erster Vorsprünge umfasst, wobei der Flansch eine Vielzahl Öffnungen umfasst und mindestens eine aus der Vielzahl der Öffnungen an einem Vorsprung jedes der entsprechenden Vielzahl erster Vorsprünge eingekuppelt ist.

6. Kupplungseinheit nach Anspruch 1, die ferner mindestens einen kombinierten Befestigungs-Dämpfer-Anschlag umfasst, wobei die erste Gehäuseschale mindestens eine Öffnung umfasst, sich der kombinierte Anschlag innerhalb der mindestens einen Öffnung befindet und der kombinierte Anschlag funktionell so angeordnet ist, dass er ein zur Antriebseinheit gehörendes Befestigungselement aufnimmt und eine Lagerfläche für den Dämpfer bereitstellt.

7. Kupplungseinheit nach Anspruch 6, bei welcher mindestens ein kombinierter Anschlag fest mit der ersten Gehäuseschale verbunden ist.

8. Kupplungseinheit nach Anspruch 6, die ferner eine Längsachse umfasst und bei welcher der kombinierte Anschlag ferner eine axiale Fläche umfasst, der kombinierte Anschlag so angeordnet ist, dass er das Befestigungselement an einer Vielzahl Stellen auf der Fläche aufnimmt und sich die Stellen in unterschiedlichem radialen Abstand von der Achse befinden.

9. Kupplungseinheit nach Anspruch 1, die ferner Folgendes umfasst: mindestens einen Dämpferanschlag; und wobei das zweite Gehäuse ferner mindestens einen zweiten Vorsprung umfasst, der mindestens eine Dämpferanschlag so angeordnet ist, dass er an dem mindestens einen zweiten Vorsprung einkuppelt, und wobei eine Position des mindestens einen Dämpferanschlags durch das Einkuppeln justiert werden kann.

10. Kupplungseinheit nach Anspruch 1, die ferner Folgendes umfasst: eine Unterlegscheibe zur Steuerung des Abhebens durch die Kupplungsbaugruppe.

11. Kupplungseinheit nach Anspruch 1, die ferner Folgendes umfasst: eine Feder und eine Nabe mit einem Absatz; und wobei die Feder in axialer Richtung durch den Absatz fixiert wird.

12. Kupplungseinheit, die funktionell so angeordnet ist, dass sie eine Antriebseinheit mit einer rotatorisch angetriebenen Einheit verbindet, wobei die Kupplungseinheit Folgendes umfasst:
ein Gehäuse, das eine erste und eine zweite Gehäuseschale umfasst:
einen Dämpfer; und
mindestens einen kombinierten Befestigungs-Dämpfer-Anschlag, wobei die erste Gehäuseschale mindestens eine Öffnung umfasst, sich der mindestens eine kombinierte Anschlag innerhalb der mindestens einen Öffnung befindet und der kombinierte Anschlag funktionell so angeordnet ist, dass er ein zur Antriebseinheit gehörendes Befestigungselement aufnimmt und eine Lagerfläche für den Dämpfer bereitstellt.

13. Kupplungseinheit nach Anspruch 12, bei welcher der mindestens eine kombinierte Anschlag fest mit der ersten Gehäuseschale verbunden ist.

14. Kupplungseinheit nach Anspruch 12, die ferner eine Längsachse umfasst; und wobei der kombinierte Anschlag ferner eine axiale Fläche umfasst, der kombinierte Anschlag so angeordnet ist, dass er das Befestigungselement an einer Vielzahl von Stellen auf der Fläche aufnimmt und sich jede Stelle in einem unterschiedlichen radialen Abstand von der Achse befindet.

15. Kupplungseinheit nach Anspruch 12, die ferner Folgendes umfasst: mindestens einen Dämpferanschlag; und wobei das zweite Gehäuse ferner mindestens einen zweiten Vorsprung umfasst, der mindestens eine Dämpferanschlag so angeordnet ist, dass er an dem mindestens einen zweiten Vorsprung einkuppelt und eine Position des mindestens einen Dämpferanschlags durch dieses Einkuppeln justiert werden kann.

16. Kupplungseinheit nach Anspruch 12, die ferner Folgendes umfasst: eine Kupplungsbaugruppe, die funktionell so angeordnet ist, dass sie die Funktion des Dämpfers steuert, wobei sich die Kupplungsbaugruppe und der Dämpfer innerhalb des Gehäuses befinden und die Kupplungsbaugruppe so angeordnet ist, dass sie an mindestens einer der Gehäuseschalen durch Reibung einkuppelt.

17. Kupplungseinheit nach Anspruch 16, bei welcher die mindestens eine der Gehäuseschalen die erste Gehäuseschale ist.

18. Kupplungseinheit nach Anspruch 16, bei welcher die mindestens eine der Gehäuseschalen die zweite Gehäuseschale ist.

19. Kupplungseinheit nach Anspruch 16, bei welcher die mindestens eine der Gehäuseschalen die erste und die zweite Gehäuseschale ist.

20. Kupplungseinheit nach Anspruch 16, bei welcher die Kupplungsbaugruppe ferner Folgendes umfasst:
einen Flansch;
mindestens eine erste Kupplungsscheibe, die nichtdrehbar mit dem Flansch verbunden ist; und
einen Kolben, der funktionell so angeordnet ist, dass er die mindestens eine erste Kupplungsscheibe an der mindestens einen der Gehäuseschalen durch Reibung einkuppelt.

21. Kupplungseinheit nach Anspruch 20, bei welcher der Dämpfer ferner ein Endlager umfasst, das an einem Teil des Flansches anliegt.

22. Kupplungseinheit nach Anspruch 20, die ferner mindestens eine zweite Kupplungsscheibe umfasst, die fest mit einer der Gehäuseschalen verbunden ist, wobei der Kolben funktionell so angeordnet ist, dass er an der mindestens einen ersten Kupplungsscheibe, der mindestens einen zweiten Kupplungsscheibe und der mindestens einen Gehäuseschale durch Reibung einkuppelt.

23. Kupplungseinheit nach Anspruch 20, bei welcher die mindestens eine erste Kupplungsscheibe ferner mindestens zwei erste Kupplungsscheiben umfasst und jede der mindestens zwei ersten Kupplungsscheiben jeweils eine Vielzahl erster Vorsprünge umfasst, wobei der Flansch eine Vielzahl Öffnungen umfasst und mindestens eine aus der Vielzahl Öffnungen an einem Vorsprung aus der jeweiligen Vielzahl erster Vorsprünge eingekuppelt ist.

24. Kupplungseinheit nach Anspruch 12, die ferner Folgendes umfasst: eine Unterlegscheibe zur Steuerung des Abhebens durch die Kupplungsbaugruppe.

25. Kupplungseinheit nach Anspruch 12, die ferner Folgendes umfasst: eine Feder und eine Nabe mit einem Absatz; und wobei die Feder durch den Absatz in axialer Richtung fixiert wird.

26. Kupplungseinheit, die funktionell so angeordnet ist, dass sie eine Antriebseinheit mit einer rotatorisch angetriebenen Einheit verbindet, wobei die Kupplungseinheit Folgendes umfasst:
einen Flansch;
eine erste Kupplungsscheibe, die nichtdrehbar am Flansch eingekuppelt ist; und
eine zweite Kupplungsscheibe, die nichtdrehbar an der ersten Kupplungsscheibe eingekuppelt ist.

27. Kupplungseinheit nach Anspruch 26, bei welcher die erste und die zweite Kupplung jeweils eine entsprechende Vielzahl erster Vorsprünge umfasst, der Flansch eine Vielzahl Öffnungen umfasst und mindestens eine aus der Vielzahl Öffnungen an einem Vorsprung aus der jeweiligen Vielzahl erster Vorsprünge eingekuppelt ist.

28. Kupplungseinheit nach Anspruch 26, die ferner Folgendes umfasst:
ein Gehäuse, das eine erste und eine zweite Gehäuseschale umfasst; und
einen Kolben, der funktionell so angeordnet ist, dass er an der ersten Kupplungsscheibe, der zweiten Kupplungsscheibe und mindestens einer der Gehäuseschalen durch Reibung einkuppelt.

29. Kupplungseinheit nach Anspruch 28, die ferner einen Dämpfer mit einem Endlager umfasst, das an einem Teil des Flansches anliegt.

30. Kupplungseinheit nach Anspruch 28, die ferner eine fest mit einer der Gehäuseschalen verbundene dritte Kupplungsscheibe umfasst, wobei der Kolben funktionell so angeordnet ist, dass er an der ersten Kupplungsscheibe, der zweiten Kupplungsscheibe, der dritten Kupplungsscheibe und mindestens einer Gehäuseschale durch Reibung einkuppelt.

31. Kupplungseinheit nach Anspruch 30, die ferner Folgendes umfasst:
Mindestens einen kombinierten Befestigungs-Dämpfer-Anschlag, wobei die erste Gehäuseschale mindestens eine Öffnung umfasst, sich der mindestens eine kombinierte Anschlag innerhalb der mindestens einen Öffnung befindet und der kombinierte Anschlag funktionell so angeordnet ist, dass er ein zur Antriebseinheit gehörendes Befestigungselement aufnimmt und eine Lagerfläche für den Dämpfer bereitstellt.

32. Kupplungseinheit nach Anspruch 31, bei welcher der mindestens eine kombinierte Anschlag fest mit der ersten Gehäuseschale verbunden ist.

33. Kupplungseinheit nach Anspruch 31, die ferner eine Längsachse umfasst; und wobei der kombinierte Anschlag ferner eine axiale Fläche umfasst, der kombinierte Anschlag so angeordnet ist, dass er das Befestigungselement an einer Vielzahl Stellen auf der Fläche aufnimmt, und sich die Stelle in unterschiedlichen radialen Abständen von der Achse befindet.

34. Kupplungseinheit nach Anspruch 26, die ferner Folgendes umfasst: mindestens einen Dämpferanschlag; wobei das zweite Gehäuse ferner mindestens einen zweiten Vorsprung umfasst, der mindestens eine Dämpferanschlag so angeordnet ist, dass er an mindestens einem zweiten Vorsprung einkuppelt und eine Position des mindestens eine Dämpferanschlags durch das Einkuppeln justiert werden kann.

35. Kupplungseinheit nach Anspruch 26, die ferner Folgendes umfasst: eine Kupplungsbaugruppe, die funktionell so angeordnet ist, dass sie die Funktion des Dämpfers steuert, wobei sich die Kupplungsbaugruppe und der Dämpfer innerhalb des Gehäuses befinden und die Kupplungsbaugruppe so angeordnet ist, dass sie an mindestens einer der Gehäuseschalen durch Reibung eingekuppelt wird.

36. Kupplungseinheit nach Anspruch 35, bei welcher die mindestens eine der Gehäuseschalen die erste Gehäuseschale ist.

37. Kupplungseinheit nach Anspruch 35, bei welcher die mindestens eine der Gehäuseschalen die zweite Gehäuseschale ist.

38. Kupplungseinheit nach Anspruch 35, bei welcher die mindestens eine der Gehäuseschalen die erste und die zweite Gehäuseschale ist.

39. Kupplungseinheit nach Anspruch 26, die ferner Folgendes umfasst: eine Unterlegscheibe zur Steuerung des Abhebens durch die Kupplungsbaugruppe.

40. Kupplungseinheit nach Anspruch 26, die ferner Folgendes umfasst: eine Feder und eine Nabe mit einem Absatz; wobei die Feder durch den Absatz in axialer Richtung fixiert wird.
